(19)

Europäisches Patentamt

European Patent Office

Office européen des brevets

(11) **EP 3 471 498 A1**

(12) **EUROPEAN PATENT APPLICATION**
published in accordance with Art. 153(4) EPC

(43) Date of publication:
**17.04.2019 Bulletin 2019/16**

(21) Application number: **18810112.5**

(22) Date of filing: **18.05.2018**

(51) Int Cl.:
**H04W 74/08** (2009.01)

(86) International application number:
**PCT/KR2018/005720**

(87) International publication number:
**WO 2018/221882 (06.12.2018 Gazette 2018/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.06.2017 US 201762513445 P**

(71) Applicant: **LG Electronics Inc.**
**Seoul 07336 (KR)**

(72) Inventors:
• **LEE, Jeongsu**
**Seoul 06772 (KR)**
• **KIM, Eunsun**
**Seoul 06772 (KR)**
• **KO, Hyunsoo**
**Seoul 06772 (KR)**
• **KIM, Kijun**
**Seoul 06772 (KR)**
• **YOON, Sukhyon**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD FOR TRANSMITTING AND RECEIVING RANDOM ACCESS CHANNEL IN WIRELESS COMMUNICATION SYSTEM, AND DEVICE THEREFOR**

(57) A method of transmitting and receiving a random access channel is proposed. In particular, the method includes receiving information on a specific bandwidth for transmitting a RACH preamble and information on the number of RACH frequency resources allocated in the specific bandwidth, and transmitting the RACH preamble over at least one RACH frequency resource among a plurality of RACH frequency resources allocated by the number of the RACH frequency resources in the specific bandwidth, wherein the specific bandwidth is configured as a portion of an entire system bandwidth.

FIG. 15

EP 3 471 498 A1

**Description**

[Technical Field]

The present invention relates to a method of transmitting and receiving a random access channel and, more particularly, to a method and apparatus for allocating a frequency resource for transmitting and receiving a random access channel and transmitting and receiving the random access channel through the allocated frequency resource.

[Background Art]

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra high reliability, ultra low latency, and ultra high availability (e.g., vehicle to everything (V2X), emergency service, and remote control), and mMTC is a future-generation mobile communication scenario characterized by low cost, low energy, short packet, and massive connectivity (e.g., Internet of things (IoT)).

[Disclosure]

[Technical Problem]

An object of the present invention devised to solve the problem lies in a method and apparatus for transmitting and receiving a random access channel.

It will be appreciated by persons skilled in the art that the objects that could be achieved with the present disclosure are not limited to what has been particularly described hereinabove and the above and other objects that the present disclosure could achieve will be more clearly understood from the following detailed description.

[Technical Solution]

The object of the present invention can be achieved by providing a method of transmitting a random access channel (RACH) by a user equipment (UE) in a wireless communication system, the method including receiving information on a specific bandwidth for transmitting a RACH preamble and information on the number of RACH frequency resources allocated in the specific bandwidth, and transmitting the RACH preamble over at least one RACH frequency resource among a plurality of RACH frequency resources allocated by the number of the RACH frequency resources in the specific bandwidth, wherein the specific bandwidth is configured as a portion of an entire system bandwidth.

In this case, the plurality of RACH frequency resources may be indexed in ascending order from a RACH frequency resource including a lowest frequency in the specific bandwidth.

The plurality of RACH frequency resources may be indexed based on a center frequency of a bandwidth for a synchronization signal.

The specific bandwidth may have a larger size than a size of a bandwidth for a synchronization signal.

The plurality of RACH frequency resources may each be associated with at least one synchronization signal transmitted to the UE by a base station (BS).

The RACH preamble may be any one of a first RACH preamble using a long sequence with a length of 839 or a second RACH preamble using a short sequence with a length of 139 and subcarrier spacing for the first RACH preamble and subcarrier spacing for the second RACH preamble may be different from each other.

In another aspect of the present invention, provided herein is a user equipment (UE) for transmitting a random access channel (RACH) in a wireless communication system, including a transceiver configured to transmit and receive a radio signal to and from a base station (BS), and a processor connected to the transceiver and configured to control the transceiver, wherein the processor controls the transceiver to receive information on a specific bandwidth for transmitting a RACH preamble and information on the number of RACH frequency resources allocated in the specific bandwidth and controls the transceiver to transmit the RACH preamble over at least one RACH frequency resource among a plurality of RACH frequency resources allocated by the number of the RACH frequency resources in the specific bandwidth, and wherein the specific bandwidth is configured as a portion of an entire system bandwidth.

The plurality of RACH frequency resources may be indexed in ascending order from a RACH frequency resource including a lowest frequency in the specific bandwidth.

The plurality of RACH frequency resources may be indexed based on a center frequency of a bandwidth for a synchronization signal.

The specific bandwidth may have a larger size than a size of a bandwidth for a synchronization signal.

The plurality of RACH frequency resources may each be associated with at least one synchronization signal transmitted to the UE by a base station (BS).

The RACH preamble may be any one of a first RACH preamble using a long sequence with a length of 839 or a second RACH preamble using a short sequence with a length of 139 and subcarrier spacing for the first RACH preamble and subcarrier spacing for the second RACH preamble may be different from each other.

In another aspect of the present invention, provided herein is a method of receiving a random access channel (RACH) by a base station (BS) in a wireless communication system, the method including transmitting information on a specific bandwidth for transmitting a RACH preamble and information on the number of RACH frequency resources allocated in the specific bandwidth by a user equipment (UE), and receiving the RACH preamble over at least one RACH frequency resource among a plurality of RACH frequency resources allocated by the number of the RACH frequency resources in the specific bandwidth, wherein the specific bandwidth may be configured as a portion of an entire system bandwidth.

In another aspect of the present invention, provided herein is a base station (BS) for receiving a random access channel (RACH) in a wireless communication system, including a transceiver configured to transmit and receive a radio signal to and from a user equipment (UE), and a processor connected to the transceiver and configured to control the transceiver, wherein the processor controls the transceiver to transmit information on a specific bandwidth for transmitting a RACH preamble by the UE and information on the number of RACH frequency resources allocated in the specific bandwidth and controls the transceiver to receive the RACH preamble over at least one RACH frequency resource among a plurality of RACH frequency resources allocated by the number of the RACH frequency resources in the specific bandwidth, and wherein the specific bandwidth is configured as a portion of an entire system bandwidth.

[Advantageous Effects]

According to the present invention, a frequency resource for transmitting a random access channel may be effectively allocated and information on the frequency resource may be indicated to a user equipment (UE).

It will be appreciated by persons skilled in the art that the effects that can be achieved with the present disclosure are not limited to what has been particularly described hereinabove and other effects of the present disclosure will be more clearly understood from the following detailed description taken in conjunction with the accompanying drawings.

[Description of Drawings]

FIG. 1 is a diagram for structures of control and user planes of radio interface protocol between a 3GPP radio access network standard-based user equipment and E-UTRAN.

FIG. 2 is a diagram for explaining physical channels used for 3GPP system and a general signal transmission method using the physical channels.

FIG. 3 is a diagram for a structure of a radio frame in LTE system.

FIG. 4 illustrates an example of a random access preamble format in a legacy LTE/LTE-A system.

FIG. 5 is a diagram for explanation of a method of configuring a RACH resource in a new RAT system.

FIG. 6 illustrates examples of a connection scheme between TXRUs and antenna elements.

FIG. 7 illustrates an example of a self-contained subframe structure;

FIGS. 8 to 16 are diagrams for explanation of a method of allocating a frequency resource for transmitting a RACH.

FIG. 17 is a block diagram of a communication apparatus according to an embodiment of the present disclosure.

[Best Mode]

The configuration, operation, and other features of the present disclosure will readily be understood with embodiments of the present disclosure described with reference to the attached drawings. Embodiments of the present disclosure as set forth herein are examples in which the technical features of the present disclosure are applied to a 3rd Generation Partnership Project (3GPP) system.

While embodiments of the present disclosure are described in the context of Long Term Evolution (LTE) and LTE-Advanced (LTE-A) systems, they are purely exemplary. Therefore, the embodiments of the present disclosure are applicable to any other communication system as long as the above definitions are valid for the communication system.

The term 'Base Station (BS)' may be used to cover the meanings of terms including Remote Radio Head (RRH), evolved Node B (eNB or eNode B), Reception Point (RP), relay, etc.

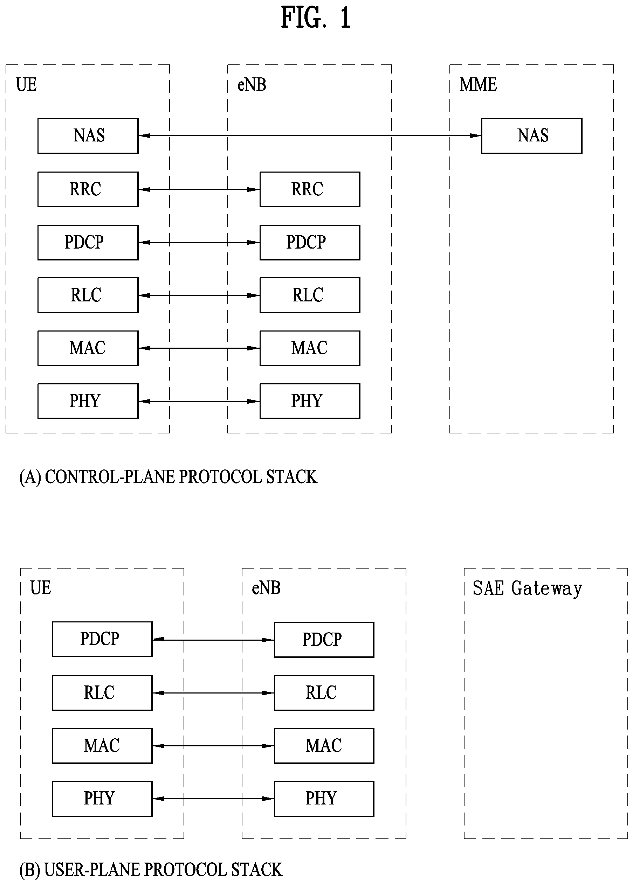

FIG. 1 illustrates control-plane and user-plane protocol stacks in a radio interface protocol architecture conforming to a 3GPP wireless access network standard between a User Equipment (UE) and an Evolved UMTS Terrestrial Radio Access Network (E-UTRAN). The control plane is a path in which the UE and the E-UTRAN transmit control messages to manage calls, and the user plane is a path in which data generated from an application layer, for example, voice data or Internet packet data is transmitted.

A PHYsical (PHY) layer at Layer 1 (L1) provides information transfer service to its higher layer, a Medium Access Control (MAC) layer. The PHY layer is connected to the MAC layer via transport channels. The transport channels deliver data between the MAC layer and the PHY layer. Data is transmitted on physical channels between the PHY layers of a transmitter and a receiver. The physical channels use time and frequency as radio resources. Specifically, the physical channels are modulated in Orthogonal Frequency Division Multiple Access (OFDMA) for Downlink (DL) and in Single Carrier Frequency Division Multiple Access (SC-FDMA) for Uplink (UL).

The MAC layer at Layer 2 (L2) provides service to its higher layer, a Radio Link Control (RLC) layer via logical channels. The RLC layer at L2 supports reliable data transmission. RLC functionality may be implemented in a function block of the MAC layer. A Packet Data Convergence Protocol (PDCP) layer at L2 performs header compression to reduce the amount of unnecessary control information and thus efficiently transmit Internet Protocol (IP) packets such as IP version 4 (IPv4) or IP version 6 (IPv6) packets via an air interface having a narrow bandwidth.

A Radio Resource Control (RRC) layer at the lowest part of Layer 3 (or L3) is defined only on the control plane. The RRC layer controls logical channels, transport channels, and physical channels in relation to configuration, reconfiguration, and release of radio bearers. A radio bearer refers to a service provided at L2, for data transmission between the UE and the E-UTRAN. For this purpose, the RRC layers of the UE and the E-UTRAN exchange RRC messages with each other. If an RRC connection is established between the UE and the E-UTRAN, the UE is in RRC Connected mode and otherwise, the UE is in RRC Idle mode. A Non-Access Stratum (NAS) layer above the RRC layer performs functions including session management and mobility management.

DL transport channels used to deliver data from the E-UTRAN to UEs include a Broadcast Channel (BCH) carrying system information, a Paging Channel (PCH) carrying a paging message, and a Shared Channel (SCH) carrying user traffic or a control message. DL multicast traffic or control messages or DL broadcast traffic or control messages may be transmitted on a DL SCH or a separately defined DL Multicast Channel (MCH). UL transport channels used to deliver data from a UE to the E-UTRAN include a Random Access Channel (RACH) carrying an initial control message and a UL SCH carrying user traffic or a control message. Logical channels that are defined above transport channels and mapped to the transport channels include a Broadcast Control Channel (BCCH), a Paging Control Channel (PCCH), a Common Control Channel (CCCH), a Multicast Control Channel (MCCH), a Multicast Traffic Channel (MTCH), etc.

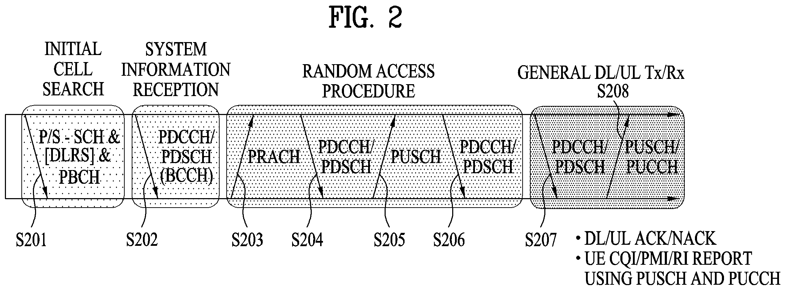

FIG. 2 illustrates physical channels and a general method for transmitting signals on the physical channels in the 3GPP system.

Referring to FIG. 2, when a UE is powered on or enters a new cell, the UE performs initial cell search (S201). The initial cell search involves acquisition of synchronization to an eNB. Specifically, the UE synchronizes its timing to the eNB and acquires a cell Identifier (ID) and other information by receiving a Primary Synchronization Channel (P-SCH) and a Secondary Synchronization Channel (S-SCH) from the eNB. Then the UE may acquire information broadcast in the cell by receiving a Physical Broadcast Channel (PBCH) from the eNB. During the initial cell search, the UE may monitor a DL channel state by receiving a DownLink Reference Signal (DL RS).

After the initial cell search, the UE may acquire detailed system information by receiving a Physical Downlink Control Channel (PDCCH) and receiving a Physical Downlink Shared Channel (PDSCH) based on information included in the PDCCH (S202).

If the UE initially accesses the eNB or has no radio resources for signal transmission to the eNB, the UE may perform a random access procedure with the eNB (S203 to S206). In the random access procedure, the UE may transmit a predetermined sequence as a preamble on a Physical Random Access Channel (PRACH) (S203 and S205) and may receive a response message to the preamble on a PDCCH and a PDSCH associated with the PDCCH (S204 and S206). In the case of a contention-based RACH, the UE may additionally perform a contention resolution procedure.

After the above procedure, the UE may receive a PDCCH and/or a PDSCH from the eNB (S207) and transmit a Physical Uplink Shared Channel (PUSCH) and/or a Physical Uplink Control Channel (PUCCH) to the eNB (S208), which is a general DL and UL signal transmission procedure. Particularly, the UE receives Downlink Control Information (DCI) on a PDCCH. Herein, the DCI includes control information such as resource allocation information for the UE. Different DCI formats are defined according to different usages of DCI.

Control information that the UE transmits to the eNB on the UL or receives from the eNB on the DL includes a DL/UL ACKnowledgment/Negative ACKnowledgment (ACK/NACK) signal, a Channel Quality Indicator (CQI), a Precoding Matrix Index (PMI), a Rank Indicator (RI), etc. In the 3GPP LTE system, the UE may transmit control information such as a CQI, a PMI, an RI, etc. on a PUSCH and/or a PUCCH.

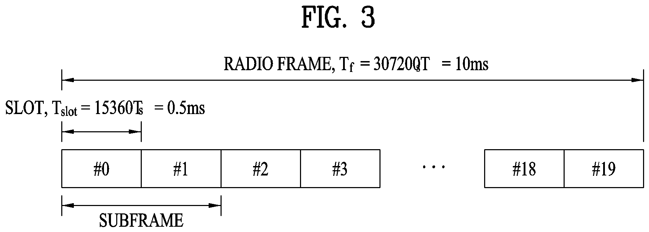

FIG. 3 illustrates a structure of a radio frame used in the LTE system.

Referring to FIG. 3, a radio frame is 10ms (327200xTs) long and divided into 10 equal-sized subframes. Each subframe is 1ms long and further divided into two slots. Each time slot is 0.5ms (15360xTs) long. Herein, Ts represents a sampling time and Ts=1/(15kHzx2048)=3.2552x10-8 (about 33ns). A slot includes a plurality of Orthogonal Frequency Division Multiplexing (OFDM) symbols or SC-FDMA symbols in the time domain by a plurality of Resource Blocks (RBs) in the frequency domain. In the LTE system, one RB includes 12 subcarriers by 7 (or 6) OFDM symbols. A unit time during which data is transmitted is defined as a Transmission Time Interval (TTI). The TTI may be defined in units of one or more subframes. The above-described radio frame structure is purely exemplary and thus the number of subframes in a radio frame, the number of slots in a subframe, or the number of OFDM symbols in a slot may vary.

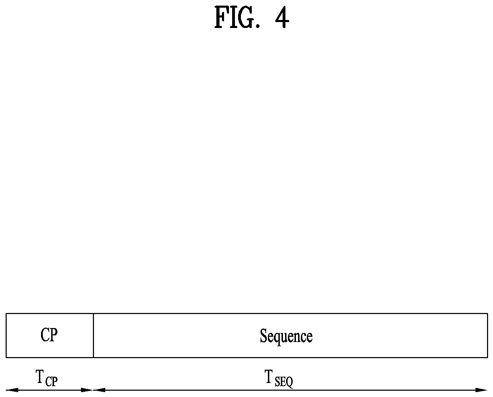

FIG. 4 illustrates a random access preamble format in a legacy LTE/LTE-A system.

In the legacy LTE/LTE-A system, a random access preamble, i.e., a RACH preamble, includes a cyclic prefix having a length $T_{CP}$ and a sequence part having a length $T_{SEQ}$ in a physical layer. The parameter values $T_{CP}$ and $T_{SEQ}$ are listed in the following table, and depend on the frame structure and the random access configuration. Higher layers control the preamble format. In the 3GPP LTE/LTE-A system, PRACH configuration information is signaled through system information and mobility control information of a cell. The PRACH configuration information indicates a root sequence index, a cyclic shift unit Ncs of a Zadoff-Chu sequence, the length of the root sequence, and a preamble format, which are to be used for a RACH procedure in the cell. In the 3GPP LTE/LTE-A system, a PRACH opportunity, which is a timing at which the preamble format and the RACH preamble may be transmitted, is indicated by a PRACH configuration index, which is a part of the RACH configuration information (refer to Section 5.7 of 3GPP TS 36.211 and "*PRACH-Config*" of 3GPP TS 36.331). The length of the Zadoff-Chu sequence used for the RACH preamble is determined according to the preamble format (refer to Table 4)

Table 1

| Preamble format | $T_{CP}$ | $T_{SEQ}$ |
|---|---|---|
| 0 | $3168 \cdot T_s$ | $24576 \cdot T_s$ |
| 1 | $21024 \cdot T_s$ | $24576 \cdot T_s$ |
| 2 | $6240 \cdot T_s$ | $2 \cdot 24576 \cdot T_s$ |
| 3 | $21024 \cdot T_s$ | $2 \cdot 24576 \cdot T_s$ |
| 4 | $448 \cdot T_s$ | $4096 \cdot T_s$ |

In the LTE/LTE-A system, the RACH preamble is transmitted in a UL subframe. The transmission of a random access preamble is restricted to certain time and frequency resources. These resources are called PRACH resources, and enumerated in increasing order of the subframe number within the radio frame and the PRBs in the frequency domain such that index 0 correspond to the lowest numbered PRB and subframe within the radio frame. Random access resources are defined according to the PRACH configuration index (refer to the standard document of 3GPP TS 36.211). The PRACH configuration index is given by a higher layer signal (transmitted by an eNB).

The sequence part of the RACH preamble (hereinafter, preamble sequence) uses a Zadoff-Chu sequence. The preamble sequences for RACH are generated from Zadoff-Chu sequences with zero correlation zone, generated from one or several root Zadoff-Chu sequences. The network configures the set of preamble sequences the UE is allowed to use. In the legacy LTE/LTE-A system, there are 64 preambles available in each cell. The set of 64 preamble sequences in a cell is found by including first, in the order of increasing cyclic shift, all the available cyclic shifts of a root Zadoff-Chu sequence with the logical index RACH_ROOT_SEQUENCE, where RACH_ROOT_SEQUENCE is broadcasted as part of the system information. Additional preamble sequences, in case 64 preambles cannot be generated from a single root Zadoff-Chu sequence, are obtained from the root sequences with the consecutive logical indexes until all the 64 sequences are found. The logical root sequence order is cyclic: the logical index 0 is consecutive to 837. The relation between a logical root sequence index and physical root sequence index u is given by Table 2 and Table 3 for preamble formats 0~3 and 4, respectively.

Table 2

| Logical root sequence number | Physical root sequence number u (in increasing order of 상기 corresponding logical sequnce number) |
|---|---|
| 0~23 | 129, 710, 140, 699, 120, 719, 210, 629, 168, 671, 84, 755, 105, 734, 93, 746, 70, 769, 60, 779, 2, 837, 1, 838 |

(continued)

| Logical root sequence number | Physical root sequence number u (in increasing order of 상기 corresponding logical sequnce number) |
|---|---|
| 24~29 | 56, 783, 112, 727, 148, 691 |
| 30~35 | 80, 759, 42, 797, 40, 799 |
| 36~41 | 35, 804, 73, 766, 146, 693 |
| 42~51 | 31, 808, 28, 811, 30, 809, 27, 812, 29, 810 |
| 52~63 | 24, 815, 48, 791, 68, 771, 74, 765, 178, 661, 136, 703 |
| 64~75 | 86, 753, 78, 761, 43, 796, 39, 800, 20, 819, 21, 818 |
| 76~89 | 95, 744, 202, 637, 190, 649, 181, 658, 137, 702, 125, 714, 151, 688 |
| 90-115 | 217, 622, 128, 711, 142, 697, 122, 717, 203, 636, 118, 721, 110, 729, 89, 750, 103, 736, 61, 778, 55, 784, 15, 824, 14, 825 |
| 116~135 | 12, 827, 23, 816, 34, 805, 37, 802, 46, 793, 207, 632, 179, 660, 145, 694, 130, 709, 223, 616 |
| 136~167 | 228, 611, 227, 612, 132, 707, 133, 706, 143, 696, 135, 704, 161, 678, 201, 638, 173, 666, 106, 733, 83, 756, 91, 748, 66, 773, 53, 786, 10, 829, 9, 830 |
| 168~203 | 7, 832, 8, 831, 16, 823, 47, 792, 64, 775, 57, 782, 104, 735, 101, 738, 108, 731, 208, 631, 184, 655, 197, 642, 191, 648, 121, 718, 141, 698, 149, 690, 216, 623, 218, 621 |
| 204~263 | 152, 687, 144, 695, 134, 705, 138, 701, 199, 640, 162, 677, 176, 663, 119, 720, 158, 681, 164, 675, 174, 665, 171, 668, 170, 669, 87, 752, 169, 670, 88, 751, 107, 732, 81, 758, 82, 757, 100, 739, 98, 741, 71, 768, 59, 780, 65, 774, 50, 789, 49, 790, 26, 813, 17, 822, 13, 826, 6, 833 |
| 264~327 | 5, 834, 33, 806, 51, 788, 75, 764, 99, 740, 96, 743, 97, 742, 166, 673, 172, 667, 175, 664, 187, 652, 163, 676, 185, 654, 200, 639, 114, 725, 189, 650, 115, 724, 194, 645, 195, 644, 192, 647, 182, 657, 157, 682, |
|  | 156, 683, 211, 628, 154, 685, 123, 716, 139, 700, 212, 627, 153, 686, 213, 626, 215, 624, 150, 689 |
| 328~383 | 225, 614, 224, 615, 221, 618, 220, 619, 127, 712, 147, 692, 124, 715, 193, 646, 205, 634, 206, 633, 116, 723, 160, 679, 186, 653, 167, 672, 79, 760, 85, 754, 77, 762, 92, 747, 58, 781, 62, 777, 69, 770, 54, 785, 36, 803, 32, 807, 25, 814, 18, 821, 11, 828, 4, 835 |
| 384~455 | 3, 836, 19, 820, 22, 817, 41, 798, 38, 801, 44, 795, 52, 787, 45, 794, 63, 776, 67, 772, 72, 767, 76, 763, 94, 745, 102, 737, 90, 749, 109, 730, 165, 674, 111, 728, 209, 630, 204, 635, 117, 722, 188, 651, 159, 680, 198, 641, 113, 726, 183, 656, 180, 659, 177, 662, 196, 643, 155, 684, 214, 625, 126, 713, 131, 708, 219, 620, 222, 617, 226, 613 |
| 456~513 | 230, 609, 232, 607, 262, 577, 252, 587, 418, 421, 416, 423, 413, 426, 411, 428, 376, 463, 395, 444, 283, 556, 285, 554, 379, 460, 390, 449, 363, 476, 384, 455, 388, 451, 386, 453, 361, 478, 387, 452, 360, 479, 310, 529, 354, 485, 328, 511, 315, 524, 337, 502, 349, 490, 335, 504, 324,515 |
| 514~561 | 323, 516, 320, 519, 334, 505, 359, 480, 295, 544, 385, 454, 292, 547, 291, 548, 381, 458, 399, 440, 380, 459, 397, 442, 369, 470, 377, 462, 410, 429, 407, 432, 281, 558, 414, 425, 247, 592, 277, 562, 271, 568, 272, 567, 264, 575, 259, 580 |
| 562~629 | 237, 602, 239, 600, 244, 595, 243, 596, 275, 564, 278, 561, 250, 589, 246, 593, 417, 422, 248, 591, 394, 445, 393, 446, 370, 469, 365, 474, 300, 539, 299, 540, 364, 475, 362, 477, 298, 541, 312, 527, 313, 526, 314, 525, 353, 486, 352, 487, 343, 496, 327, 512, 350, 489, 326, 513, 319, 520, 332, 507, 333, 506, 348, 491, 347, 492, 322, 517 |
| 630~659 | 330, 509, 338, 501, 341, 498, 340, 499, 342, 497, 301, 538, 366, 473, 401, 438, 371, 468, 408, 431, 375, 464, 249, 590, 269, 570, 238, 601, 234, 605 |

(continued)

| Logical root sequence number | Physical root sequence number u (in increasing order of 상기 corresponding logical sequnce number) |
|---|---|
| 660~707 | 257, 582, 273, 566, 255, 584, 254, 585, 245, 594, 251, 588, 412, 427, 372, 467, 282, 557, 403, 436, 396, 443, 392, 447, 391, 448, 382, 457, 389, 450, 294, 545, 297, 542, 311, 528, 344, 495, 345, 494, 318, 521, 331, 508, 325, 514, 321, 518 |
| 708~729 | 346, 493, 339, 500, 351, 488, 306, 533, 289, 550, 400, 439, 378, 461, |
| | 374, 465, 415, 424, 270, 569, 241, 598 |
| 730~751 | 231, 608, 260, 579, 268, 571, 276, 563, 409, 430, 398, 441, 290, 549, 304, 535, 308, 531, 358, 481, 316, 523 |
| 752~765 | 293, 546, 288, 551, 284, 555, 368, 471, 253, 586, 256, 583, 263, 576 |
| 766~777 | 242, 597, 274, 565, 402, 437, 383, 456, 357, 482, 329, 510 |
| 778~789 | 317, 522, 307, 532, 286, 553, 287, 552, 266, 573, 261, 578 |
| 790~795 | 236, 603, 303, 536, 356, 483 |
| 796~803 | 355, 484, 405, 434, 404, 435, 406, 433 |
| 804~809 | 235, 604, 267, 572, 302, 537 |
| 810~815 | 309, 530, 265, 574, 233, 606 |
| 816~819 | 367, 472, 296, 543 |
| 820~837 | 336, 503, 305, 534, 373, 466, 280, 559, 279, 560, 419, 420, 240, 599, 258, 581, 229, 610 |

Table 3

| Logical root sequence number | Physical root sequence number $u$ (in increasing order of the corresponding logical sequence number) | | | | | | | | | | | | | | | | | | | |
|---|---|---|---|---|---|---|---|---|---|---|---|---|---|---|---|---|---|---|---|---|
| 0 - 19 | 1 | 138 | 2 | 137 | 3 | 136 | 4 | 135 | 5 | 134 | 6 | 133 | 7 | 132 | 8 | 131 | 9 | 130 | 10 | 129 |
| 20 - 39 | 11 | 128 | 12 | 127 | 13 | 126 | 14 | 125 | 15 | 124 | 16 | 123 | 17 | 122 | 18 | 121 | 19 | 120 | 20 | 119 |
| 40 - 59 | 21 | 118 | 22 | 117 | 23 | 116 | 24 | 115 | 25 | 114 | 26 | 113 | 27 | 112 | 28 | 111 | 29 | 110 | 30 | 109 |
| 60 - 79 | 31 | 108 | 32 | 107 | 33 | 106 | 34 | 105 | 35 | 104 | 36 | 103 | 37 | 102 | 38 | 101 | 39 | 100 | 40 | 99 |
| 80 - 99 | 41 | 98 | 42 | 97 | 43 | 96 | 44 | 95 | 45 | 94 | 46 | 93 | 47 | 92 | 48 | 91 | 49 | 90 | 50 | 89 |
| 100 - 119 | 51 | 88 | 52 | 87 | 53 | 86 | 54 | 85 | 55 | 84 | 56 | 83 | 57 | 82 | 58 | 81 | 59 | 80 | 60 | 79 |
| 120 - 137 | 61 | 78 | 62 | 77 | 63 | 76 | 64 | 75 | 65 | 74 | 66 | 73 | 67 | 72 | 68 | 71 | 69 | 70 | - | - |
| 138 - 837 | N/A | | | | | | | | | | | | | | | | | | | |

u-th root Zadoff-Chu sequence is defined by the following equation.

Equation 1

$$x_u(n) = e^{-j\frac{\pi u n(n+1)}{N_{ZC}}}, \quad 0 \le n \le N_{ZC} - 1$$

Table 4

| Preamble format | $N_{ZC}$ |
|---|---|
| 0 ~ 3 | 839 |
| 4 | 139 |

From the u-th root Zadoff-Chu sequence, random access preambles with zero correlation zones of length $N_{ZC}$-1 are defined by cyclic shifts according to $x_{u,v}(n) = x_u((n+C_v) \bmod N_{ZC})$, where the cyclic shift is given by the following equation.

Equation 2

$$C_v = \begin{cases} vN_{CS} & v = 0,1,\dots,\lfloor N_{ZC}/N_{CS} \rfloor - 1, N_{CS} \neq 0 & \text{for unrestricted sets} \\ 0 & N_{CS} = 0 & \text{for unrestricted sets} \\ d_{start}\lfloor v/n_{shift}^{RA} \rfloor + (v \bmod n_{shift}^{RA})N_{CS} & v = 0,1,\dots,n_{shift}^{RA}n_{group}^{RA} + \bar{n}_{shift}^{RA} - 1 & \text{for restricted sets} \end{cases}$$

Ncs is given by Table 5 for preamble formats 0~3 and by Table 6 for preamble format 4.

Table 5

| zeroCorrelationZoneConfig | $N_{CS}$ value | |
| --- | --- | --- |
| | Unrestricted set | Restricted set |
| 0 | 0 | 15 |
| 1 | 13 | 18 |
| 2 | 15 | 22 |
| 3 | 18 | 26 |
| 4 | 22 | 32 |
| 5 | 26 | 38 |
| 6 | 32 | 46 |
| 7 | 38 | 55 |
| 8 | 46 | 68 |
| 9 | 59 | 82 |
| 10 | 76 | 100 |
| 11 | 93 | 128 |
| 12 | 119 | 158 |
| 13 | 167 | 202 |
| 14 | 279 | 237 |
| 15 | 419 | - |

Table 6

| zeroCorrelationZoneConfig | $N_{CS}$ value |
| --- | --- |
| 0 | 2 |
| 1 | 4 |
| 2 | 6 |
| 3 | 8 |
| 4 | 10 |
| 5 | 12 |
| 6 | 15 |
| 7 | N/A |

(continued)

| zeroCorrelationZoneConfig | $N_{CS}$ value |
|---|---|
| 8 | N/A |
| 9 | N/A |
| 10 | N/A |
| 11 | N/A |
| 12 | N/A |
| 13 | N/A |
| 14 | N/A |
| 15 | N/A |

The parameter *zeroCorrelationZoneConfig* is provided by higher layers. The parameter *High-speed-flag* provided by higher layers determines if unrestricted set or restricted set shall be used..

The variable $d_u$ is the cyclic shift corresponding to a Doppler shift of magnitude $1/T_{SEQ}$ and is given by the following equation.

## Equation 3

$$d_u = \begin{cases} p & 0 \le p < N_{ZC}/2 \\ N_{ZC} - p & \text{otherwise} \end{cases}$$

$p$ is the smallest non-negative integer that fulfils $(pu) \bmod N_{ZC} = 1$.. The parameters for restricted sets of cyclic shifts depend on $d_u$. For $N_{ZC} \le d_u < N_{ZC}/3$, the parameters are given by the following equation.

## Equation 4

$$n_{shift}^{RA} = \lfloor d_u / N_{CS} \rfloor$$
$$d_{start} = 2d_u + n_{shift}^{RA} N_{CS}$$
$$n_{group}^{RA} = \lfloor N_{ZC} / d_{start} \rfloor$$
$$\bar{n}_{shift}^{RA} = \max\left(\lfloor (N_{ZC} - 2d_u - n_{group}^{RA} d_{start}) / N_{CS} \rfloor, 0\right)$$

For $N_{ZC}/3 \le d_u < (N_{ZC} - N_{CS})/2$, the parameters are given by the following equation.

## Equation 5

$$n_{shift}^{RA} = \lfloor (N_{ZC} - 2d_u) / N_{CS} \rfloor$$
$$d_{start} = N_{ZC} - 2d_u + n_{shift}^{RA} N_{CS}$$
$$n_{group}^{RA} = \lfloor d_u / d_{start} \rfloor$$
$$\bar{n}_{shift}^{RA} = \min\left(\max\left(\lfloor (d_u - n_{group}^{RA} d_{start}) / N_{CS} \rfloor, 0\right), n_{shift}^{RA}\right)$$

For all other values of $d_u$, there are no cyclic shifts in the restricted set.

The time-continuous random access signal $s(t)$ which is the baseband signal of RACH is defined by the following Equation.

Equation 6

$$s(t) = \beta_{\text{PRACH}} \sum_{k=0}^{N_{\text{ZC}}-1} \sum_{n=0}^{N_{\text{ZC}}-1} x_{u,v}(n) \cdot e^{-j\frac{2\pi nk}{N_{\text{ZC}}}} \cdot e^{j2\pi\left(k+\varphi+K\left(k_0+\frac{1}{2}\right)\right)\Delta f_{\text{RA}}\left(t-T_{\text{CP}}\right)}$$

where $0 \leq t < T_{\text{SEQ}} - T_{\text{CP}}$, $\beta$PRACH is an amplitude scaling factor in order to conform to the transmit power specified in 3GPP TS 36.211, and $k_0 = n^{\text{RA}}_{\text{PRB}} N^{\text{RB}}_{\text{sc}} - N^{\text{UL}}_{\text{RB}} N^{\text{RB}}_{\text{sc}}/2$. $N^{\text{RB}}_{\text{sc}}$ denotes the number of subcarriers constituting one resource block (RB). $N^{\text{UL}}_{\text{RB}}$ denotes the number of RBs in a UL slot and depends on a UL transmission bandwidth. The location in the frequency domain is controlled by the parameter $n^{\text{RA}}_{\text{PRB}}$ is derived from the section 5.7.1 of 3GPP TS 36.211. The factor $K = \Delta f/\Delta f_{\text{RA}}$ accounts for the difference in subcarrier spacing between the random access preamble and uplink data transmission. The variable $\Delta f_{\text{RA}}$, the subcarrier spacing for the random access preamble, and the variable $\varphi$, a fixed offset determining the frequency-domain location of the random access preamble within the physical resource blocks, are both given by the following table.

Table 7

| Preamble format | $\Delta f_{\text{RA}}$ | $\varphi$ |
|---|---|---|
| 0 ~ 3 | 1250Hz | 7 |
| 4 | 7500Hz | 2 |

In the LTE/LTE-A system, a subcarrier spacing $\Delta f$ is 15 kHz or 7.5 kHz. However, as given by Table 7, a subcarrier spacing $\Delta f_{\text{RA}}$ for a random access preamble is 1.25 kHz or 0.75 kHz.

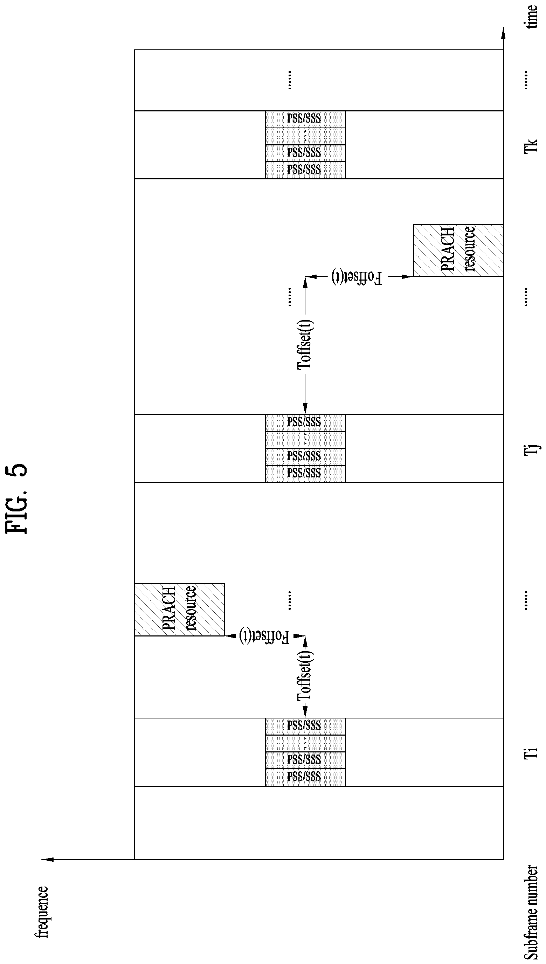

FIG. 5 is a diagram for explanation of a method of configuration of an RACH resource. Referring to FIG. 5, a UE that derives a synchronization signal (SS) and information required to transmit RACH from an eNB may transmit an RACH preamble sequence using time and frequency resources configured based on the information required to transmit RACH. In a legacy LTE system, a layout and an RACH configuration with respect to a slot and time in which RACH is to be generated are defined.

A new RAT system is expected to support up to a very high frequency band of a maximum of 100 GHz from a low frequency band of 700 MHz and, thus, a center frequency of a synchronization signal block (SSB) may be flexibly changed in an entire system frequency bandwidth, differently from the LTE. Accordingly, the new RAT system may explicitly notify a UE about a RACH time-frequency resource in which the UE is capable of transmitting a RACH but may implicitly associate the UE with a resource in which the SSB is capable of being transmitted and the UE may recognize a position of the RACH time-frequency resource through the SSB that is implicitly received by the UE.

In other words, as shown in FIG. 5, a time resource of the RACH may be allocated with specific offset from a time resource in which the SSB is transmitted and a frequency resource of the RACH may be allocated with specific offset from a position in which the SSB is transmitted.

In FIG. 5, Toffset(t) is a function of the number of a subframe in which the SSB is transmitted, that is, a time in which the SSB is transmitted and a cell ID detected by a UE through an SSB. Similarly, Foffset(t) is a function of the number of a subframe in which the SSB is transmitted, that is, a time in which the SSB is transmitted, a frequency in which the SSB is transmitted, and a cell ID detected by a UE. In other words, Toffset(t)=Function(t, cell ID) and Foffset(t)=Function(t, f, cell ID) may be satisfied.

The RACH is configured cell-specifically and, in this regard, a UE may derive a RACH frequency resource using a function of a time/frequency resource in which the SSB is transmitted and a cell ID detected by the UE. That is, a corresponding RACH time/frequency offset value may be a function of a cell ID. When a SSB including a PSS, a SSS, and a PBCH is transmitted in a plurality of beam directions, the cell-specific RACH resource may be configured beam-commonly or beam-specifically. For example, a time resource of a RACH resource may be associated with a subframe in which the SSB is transmitted and may be configured beam-commonly. That is, when Toffset(t)=Function(t, cell ID), a unit of 't' may be configured in units of subframes (e.g., a subframe number) beam-commonly.

On the other hand, a time resource of a RACH resource may be associated with a symbol in which a SSB is transmitted and may be configured beam-specifically. That is, when Toffset(t)=Function (t, cell ID), a unit of 't' may be configured in units of symbols (e.g., a subframe number and a symbol number) in which a beam is transmitted, beam-specifically.

Through a RACH resource configuration, RACH preamble sequence related information such as a RACH preamble index, RACH preamble transmission power, and RA-RNTI as well as a RACH transmission time-frequency resource may be transmitted. In this case, the RACH resource configuration may be transferred through a PBCH. In other words, RACH resource configuration information may be transmitted as essential system information. The essential system information may further include information about numerology used to transmit and receive a UL/DL control channel and a UL/DL data channel as well as the aforementioned RACH resource configuration related information. The numerology may include information about subcarrier spacing, a CP length, a subframe length, a symbol length, the number of symbols included in one subframe, and so on. In addition, frequency bands of UL/DL are different and, thus, UL/DL system band information may be further included.

Hereinafter, channel state information (CSI) reporting will be described below. In the current LTE standard, there are two MIMO transmission schemes, open-loop MIMO operating without channel information and closed-loop MIMO operating with channel information. Particularly in the closed-loop MIMO, each of an eNB and a UE may perform beamforming based on CSI to obtain the multiplexing gain of MIMO antennas. To acquire CSI from the UE, the eNB may command the UE to feed back CSI on a downlink signal by allocating a PUCCH (Physical Uplink Control CHannel) or a PUSCH(Physical Uplink Shared CHannel) to the UE.

The CSI is largely classified into three information types, RI (Rank Indicator), PMI (Precoding Matrix), and CQI (Channel Quality Indication). First of all, the RI indicates rank information of a channel as described above, and means the number of streams that may be received by a UE through the same time-frequency resources. Also, since the RI is determined by long-term fading of a channel, the RI may be fed back to an eNB in a longer period than a PMI value and a CQI value.

Second, the PMI is a value obtained by reflecting spatial characteristics of a channel, and indicates a precoding matrix index of an eNB, which is preferred by the UE based on a metric such as signal to interference and noise ratio (SINR). Finally, the CQI is a value indicating channel strength, and generally means a reception SINR that may be obtained by the eNB when the PMI is used.

In the 3GPP LTE-A system, the eNB may configure a plurality of CSI processes for the UE, and may be reported CSI for each of the CSI processes. In this case, the CSI process includes CSI-RS resource for specifying signal quality and CSI-IM (interference measurement) resource, that is, IMR (interference measurement resource) for interference measurement.

Since a wavelength becomes short in the field of Millimeter Wave (mmW), a plurality of antenna elements may be installed in the same area. In more detail, a wavelength is 1cm in a band of 30GHz, and a total of 64(8x8) antenna elements of a 2D array may be installed in a panel of 4 by 4 cm at an interval of 0.5 lambda (wavelength). Therefore, a recent trend in the field of mmW attempts to increase coverage or throughput by enhancing BF (beamforming) gain using a plurality of antenna elements.

In this case, if a transceiver unit (TXRU) is provided to control a transmission power and phase per antenna element, independent beamforming may be performed for each frequency resource. However, a problem occurs in that effectiveness is deteriorated in view of cost when TXRU is provided for all of 100 antenna elements. Therefore, a scheme is considered, in which a plurality of antenna elements are mapped into one TXRU and a beam direction is controlled by an analog phase shifter. Since this analog beamforming scheme may make only one beam direction in a full band, a problem occurs in that frequency selective beamforming is not available.

As an intermediate type of digital BF and analog BF, a hybrid BF having B TXRUs smaller than Q antenna elements may be considered. In this case, although there is a difference depending on a connection scheme of B TXRUs and Q antenna elements, the number of beam directions that enable simultaneous transmission is limited to B or less.

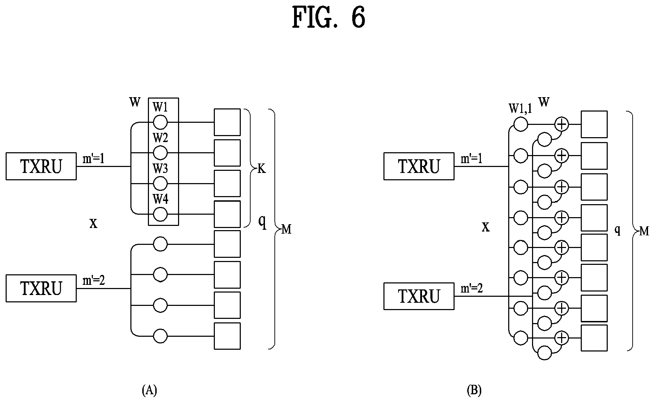

FIG. 6 illustrates examples of a connection scheme between TXRUs and antenna elements.

(a) of FIG. 6 illustrates that TXRU is connected to a sub-array. In this case, the antenna elements are connected to only one TXRU. Unlike (a) of FIG. 6, (b) of FIG. 6 illustrates that TXRU is connected to all antenna elements. In this case, the antenna elements are connected to all TXRUs. In FIG. 6, W indicates a phase vector multiplied by an analog phase shifter. That is, a direction of analog beamforming is determined by W. In this case, mapping between CSI-RS antenna ports and TXRUs may be 1-to-1 or 1-to-many.

As more communication devices require greater communication capacity, the need of mobile broadband communication more advanced than the conventional RAT (radio access technology) has been issued. Also, massive MTC (Machine Type Communications) technology that provides various services anywhere and at any time by connecting a plurality of devices and things is one of main issues which will be considered in next generation communication. Furthermore, a communication system design considering service/UE susceptible to reliability and latency has been discussed. Considering this status, the introduction of the next generation RAT has been discussed, and the next generation RAT will be referred to as NewRAT in the present invention.

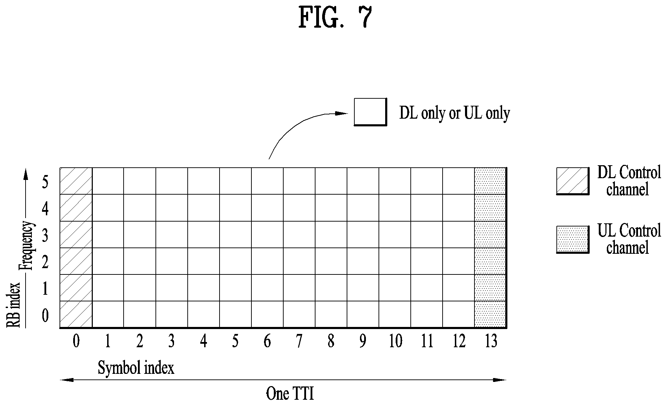

A self-contained sub frame structure shown in FIG. 7 is considered in the fifth generation NewRAT to minimize data transmission latency in a TDD system. FIG. 7 illustrates an example of a self-contained subframe structure.

In FIG. 7, oblique line areas indicate downlink control regions and black colored areas indicate uplink control regions. Areas having no mark may be used for downlink data transmission or uplink data transmission. In this structure, downlink transmission and uplink transmission are performed in due order within one subframe, whereby downlink data may be transmitted and uplink ACK/NACK may be received within the subframe. As a result, the time required for data re-transmission may be reduced when an error occurs in data transmission, whereby latency of final data transfer may be minimized.

In this self-contained subframe structure, a time gap for switching from a transmission mode to a reception mode or vice versa is required for the base station and the UE. To this end, some OFDM symbols (OS) at the time when a downlink is switched to an uplink in the self-contained subframe structure are set to a guard period.

Examples of the self-contained subframe type that may be configured in the system operating based on the NewRAT may consider four subframe types as follows.

- downlink control period + downlink data period + GP + uplink control period
- downlink control period + downlink data period
- downlink control period + GP + uplink data period + uplink control period
- downlink control period + GP + uplink data period

As described above, a new RAT (NR) system supports up to a very high frequency band of a maximum of 100 GHz from a low frequency band of 700 MHz. Differently from a legacy LTE system for transmitting an SSB, in which information required to transmit a RACH preamble is transmitted, in 6RBs positioned at the center position, that is, in 72 subcarriers positioned at the center position, a transmission band position of the SSB may not be positioned at the center of a system band in the NR system.

A UE in an IDLE state performs frequency acquisition from a SSB and, thus, the present invention proposes a layout RACH or frequency resource configuration method of a frequency resource in which a RACH preamble is transmitted, based on a position and system bandwidth of the SSB.

In NR, a plurality of SS blocks may be formed and transmitted depending on the number of beams of an eNB. Each SS block may have a unique index and a UE may detect PSS/SSS and may decode PBCH to infer an index of an SS block to which the corresponding PSS/SSS/PBCH belongs. Then, system information transmitted by an eNB may include RACH configuration information and, in this regard, the RACH configuration information may include a list of a plurality of RACH resources, information for identifying the plurality of RACH resources, and connection information of each RACH resource and a SS block.

Similarly to the above description in which a RACH resource is limited to a time/frequency resource in which a UE transmits a PRACH preamble, the RACH resource may also be limited to a time/frequency resource in the following description. Hereinafter, a method of indicating a RACH position at the frequency axis as well as a RACH position at the time axis is also described. As described above, one RACH resource is connected to one or more SS blocks and RACH resources that are consecutive in the time axis are defined as a RACH resource set. A plurality of RACH resource sets that are consecutive in the frequency time as well as in the time axis may be defined as one RACH resource block.

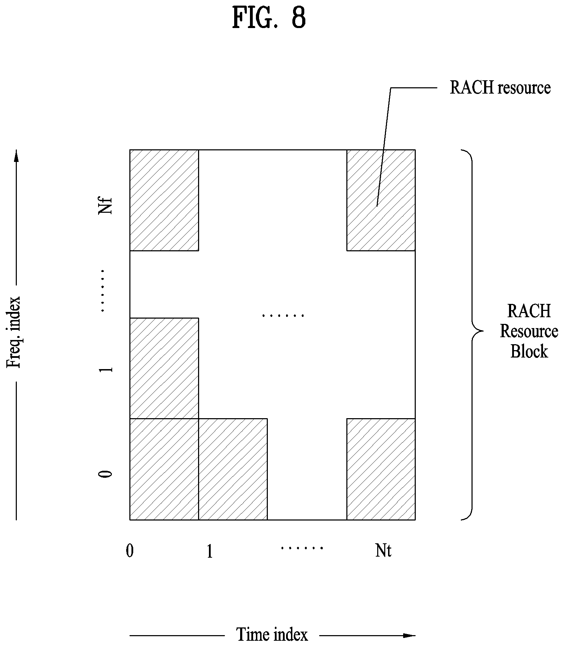

FIG. 8 illustrates an example of a RACH resource block.

As shown in FIG. 8, the RACH resource block may be defined in one time/frequency chunk in which RACH resources are collected and each RACH resource in the RACH resource block may have a unique index determined according to time/frequency positions.

RACH resource indexes in the RACH resource block may be mapped according to a specific rule. For example, the RACH resource indexes may be assigned using a method in a frequency-time order or a time-frequency order. For example, referring to FIG. 21, in the case of the frequency-time order method, RACH resources in the RACH resource block may be indexed as follows.

- RACH resource #0 (time, frequency): (0,0),
- RACH resource #1: (1, 0)
- RACH resource #2: (2, 0)
- ..........

Here, a unit of a time axis length in the RACH resource block may be determined according to a RACH preamble format and a unit of a frequency axis length may be determined by a RACH resource bandwidth (e.g., 1.08 MHz) or a resource block group (RBG) unit.

A RACH preamble may be defined as two types of RACH preambles such as a RACH preamble using a long sequence with a length of 839 and a RACH preamble using a short sequence with a length of 127 or 139. Subcarrier spacing of the long-sequence RACH preamble may use 1.25 kHz and 5 kHz and, in this case, the RACH preamble transmission bandwidth may use 1.08 MHz and 4.32 MHz, respectively.

On the other hand, subcarrier spacing of the short-sequence RACH preamble may use 15 kHz, 30 kHz, or 60 kHz and a transmission bandwidth may use 2.16 MHz, 4.32 MHz, or 8.84 Mhz. When subcarrier spacing of a data channel is 15 kHz, a slot length may be defined as 1 ms. In this case, an RB grid of a frequency axis may be defined in units of subcarrier spacing of 15 kHz and a frequency axis candidate position of the long-sequence RACH preamble may be defined according to the RB grid based on subcarrier spacing of 15 kHz. For example, 1.08 MHz and 4.32 MHz may correspond to 6 RBs and 24 RBs in subcarrier spacing of 15 kHz, respectively.

Two methods of configuring a RACH resource in the time axis are described with regard to the present invention. That is, in NR, a UE attempts RACH prior to RRC connection and, thus, Embodiment 1 is described below under the assumption that a RACH is transmitted in a state in which a UE is not capable of recognizing an entire system band and RB indexing and Embodiment 2 is described below under the assumption that the UE recognizes both RB and RBG information.

<u><Embodiment 1: Allocation Method in RACH Resource Bandwidth Unit></u>

In Embodiment 1, as described above, it is assumed that a UE does not recognize RB indexing information in a system band. That is, Embodiment 1 basically proposes a method of signaling a frequency resource of a RACH to a UE based on a bandwidth of a SSB and a bandwidth of a RACH. When the UE detects PSS/SSS, the UE is capable of easily recognizing the bandwidth of the SSB and the bandwidth of the RACH and, thus, it may be possible to signal a frequency resource of the RACH based on the bandwidth of the SSB and the bandwidth of the RACH.

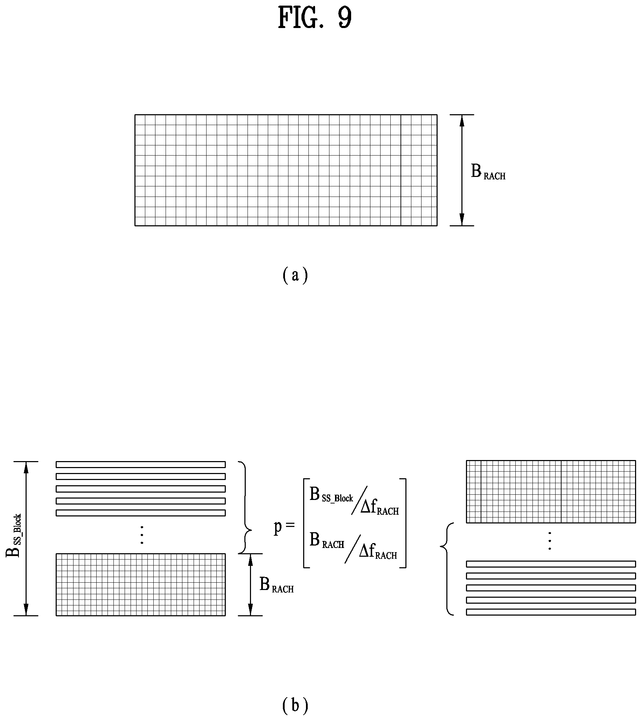

Hereinafter, two parameters required to explain the present invention are defined as $B_{ss\_Block}$ and $B_{RACH}$. $B_{ss\_Block}$ refers to the bandwidth of the SSB, $B_{RACH}$ refers to the bandwidth of the RACH, and the bandwidth of the RACH is indicated in (a) of FIG. 9.

**Embodiment 1-1. Method of indicating RACH Resource in Bandwidth of SSB**

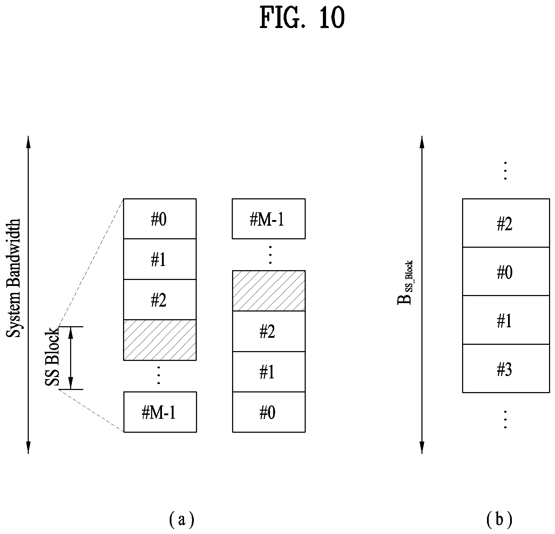

For a RACH procedure in a general TDD system, a RACH resource may be limited into a band in which a SSB is transmitted. To handle an additional situation in which a RACH needs to be transmitted in a bandwidth of a SSB, Embodiment 1-1 needs to be considered. In this case, the bandwidth of the SSB is larger than the bandwidth of the RACH and, as shown in (a) of FIG. 10, the bandwidth of the SSB may be classified into M RACH bandwidths. In this case, a method of configuring a RACH resource in a limited SSB bandwidth may have Options 1-1 and 1-2 below.

<u>(1) Option 1-1: Method of Indicating Frequency Offset using Default Subcarrier Unit of RACH</u>

As described above, a bandwidth of a RACH and a bandwidth of a SSB may be basically changed in size thereof depending on each subcarrier. Start offset indicating the RACH bandwidth in the SSB bandwidth may be repre-

$$p = \left\lfloor \frac{B_{SS\_Block}}{\Delta f_{RACH}} - \frac{B_{RACH}}{\Delta f_{RACH}} \right\rfloor$$

sented by the number . Here, $\Delta f_{RACH}$ refers to subcarrier spacing of the RACH.

Accordingly, as shown in (b) of FIG. 9, it may be possible to determine offset based on a subcarrier unit of a RACH based on an uppermost or lowermost part of the SSB bandwidth. On the other hand, in addition to the method of determining offset, it may be possible to determine each of a plurality of RACH frequency resources in the SSB bandwidth but, in this case, complexity of a UE may be increased and a plurality of bits may be required to transmit information about each of the plurality of RACH frequency resources, thereby increasing signaling overhead.

<u>(2) Option 1-2: Method of Indicating RACH Frequency Resource in units of Frequency Bandwidths of RACH</u>

A SSB bandwidth may be represented as M RACH bandwidths based on an uppermost or lowermost part of the SSB bandwidth in the frequency domain, as shown in (a) of FIG. 10. In this case, the SSB bandwidth may not be accurately divided into an integer times the RACH bandwidth and, in this case, the remaining part that is not divided may not be considered as a RACH resource.

Option 1-2 relates to a method of configuring a RACH resource based on the RACH bandwidth, differently from Option 1-1 in which offset is determined based on a subcarrier of a RACH. Option 1-2 may be applied in a first method of determining a RACH resource with a value of 0 to M-1 with respect to M resource regions based on the uppermost or lowermost part of the SSB bandwidth as shown in (a) of FIG. 10 and a second method of determining a RACH resource based on a center frequency of the SSB bandwidth as shown in (b) of FIG. 10. In the case of the second method, a position of the RACH resource may be recognized using a remainder and a quotient with a RACH resource index received by a UE as a dividend and a divisor of 2. To apply the second method, a bit number of $\lceil \log_2(M) \rceil$ may be required.

In the case of Option 1-1, a RACH resource is configured based on an entire system bandwidth using a RACH block with a smaller size than a SSB and, thus, may be larger than Option 1-2 in terms of coverage but the number of used bits may be remarkably increased.

In Embodiment 1-1, a frequency resource for a flexible RACH may be advantageously configured with respect to a limited resource of an entire system bandwidth or an SSB bandwidth.

**Embodiment 1-2. Method of Indicating RACH Resource to Region Except for Bandwidth of SSB**

To improve system flexibility, effectiveness of resource usage, and so on, a RACH resource may be indicated to a region except for the SSB bandwidth. However, in the case of a FDD, a frequency position of the RACH resource needs to be explicitly determined.

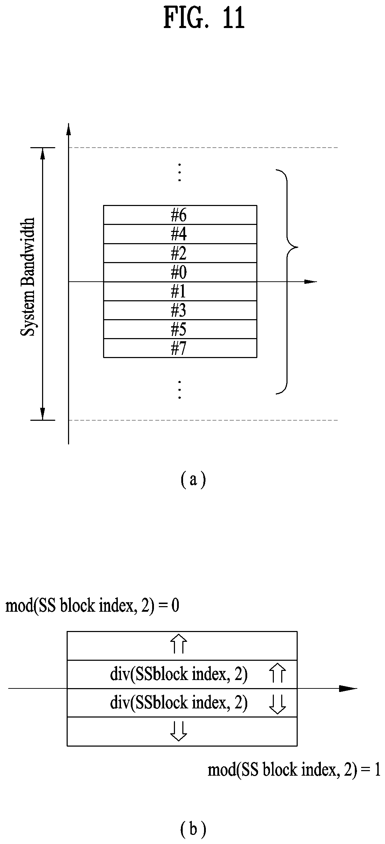

A RACH resource may be allocated by N (even times) SSB bandwidths based on a center frequency with respect to the frequency domain in which a RACH is to be transmitted in an entire system bandwidth, as shown in (a) of FIG. 11. In this case, the N SSB bandwidths may be equal to or smaller than the entire system bandwidth.

The N SSB bandwidths may be indexed with N indexes and Option 1-2 may be applied in one SSB bandwidth to allocate a RACH frequency resource.

In this case, indexing of the N SSB bandwidths with respect to the frequency domain may be assigned upward and downward based on the center frequency, as shown in (a) of FIG. 11.

Based on this, an eNB may transmit (SSblockbandwidthindex, RACHblockbandwidthindex) information, i.e., (0 to N and 0 to M-1) information. As shown in (b) of FIG. 11, a UE may search for a RACH resource in an upper region of the center frequency when a remainder obtained by dividing the received SS block bandwidth index by 2 is 0 and, may search for a RACH resource in a lower region of the center frequency when the remainder is 1. In addition, depending on the remainder corresponding to a quotient obtained by dividing the SS block bandwidth index by 2, a frequency position of the corresponding SSB bandwidth may be recognized via a shift to the upper region or the lower region from the center frequency. Then, the position may be accurately recognized through the RACH block bandwidth index. In Embodiment 1-2 above, to indicate a RACH frequency resource, a bit number of $\lceil \log_2(M) \rceil + \lceil \log_2(N) \rceil$ may be required.

<u><Embodiment 2: Method of Allocating RACH Resource in Units of Resource Block Groups (RBGs)></u>

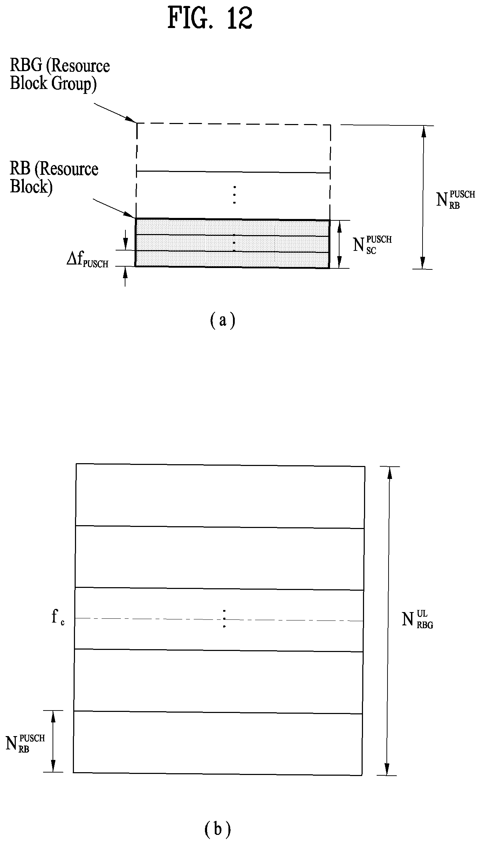

A method of allocating a RACH resource when a UE assumes to recognize RB information about an entire system is described below with regard to Embodiment 2. That is, the UE may acquire information about an RB based on subcarrier spacing transmitted with remaining minimum system information (RMSI). In this case, the RB and the RBG may be defined as $N_{SC}^{PUSCH}$ subcarriers and $N_{RB}^{PUSCH}$ RBs, respectively, as shown in (a) of FIG. 12.

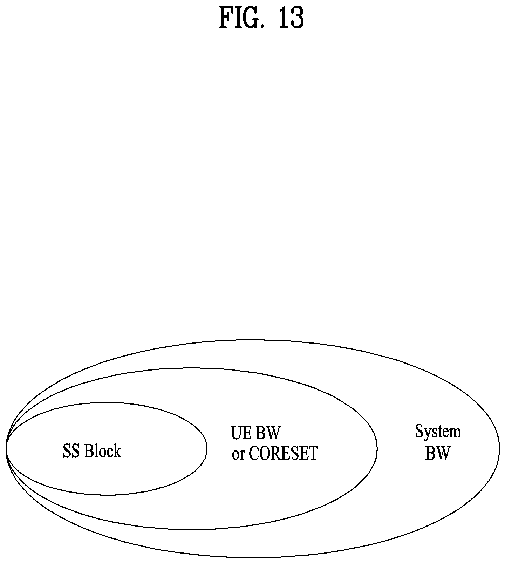

When the frequency domain is allocated based on a RBG of (a) of FIG. 12, considered bandwidth regions may be the same as in FIG. 13. That is, a RACH frequency resource may be allocated in the same range as the SSB bandwidth. In addition, a RACH frequency resource may be allocated in a bandwidth range of a UE minimum bandwidth that is a region that is larger than the SSB bandwidth and smaller than the system bandwidth or a control resource set (CORESET) region that is a resource region of a control channel for transferring DCI of RMSI. Here, information on the UE minimum bandwidth may be transferred through the RMSI. Otherwise, the RACH frequency resource may be allocated in a range of an entire system bandwidth.

In other words, as shown in FIG. 13, a size of the entire system bandwidth is largest and the UE minimum bandwidth or the CORESET region may be included in the entire system bandwidth to be configured as a portion of the entire system bandwidth. That is, the UE minimum bandwidth or the CORESET region may be configured in the entire system bandwidth and, as necessary, a plurality of UE minimum bandwidths or CORESET regions may be configured in the entire system bandwidth.

Similarly, the SSB bandwidth may be included in the UE minimum bandwidth to be configured as a portion of the UE minimum bandwidth. However, even if the SSB bandwidth has a smaller size than the UE minimum bandwidth, a position of the SSB bandwidth may be configured at a position distinguished from the UE minimum bandwidth. However, in this case, the SSB bandwidth may also be configured in the entire system bandwidth.

A method of allocating each frequency of the above three cases is described below with regard to Embodiment 2.

**Embodiment 2-1. Method of Indicating RACH Resource in Entire System Bandwidth**

Embodiment 2-1 relates to a method of allocating a frequency resource in an entire system bandwidth. As shown in (b) of FIG. 12, the entire system bandwidth may be divided into $N_{PRG}^{UL}$ RBGs and, in this case, the $N_{PRG}^{UL}$ RBGs may be configured based on the center frequency.

(1) Option 2-1: Method of Allocating RACH Frequency Resource Based on Center Frequency

Then entire system band may be defined as $N_{PRG}^{UL}$ RBGs and, when the entire system band is accurately indivisible by the $N_{PRG}^{UL}$ RBGs, the remaining resource region may not be allocated as the RACH frequency resource.

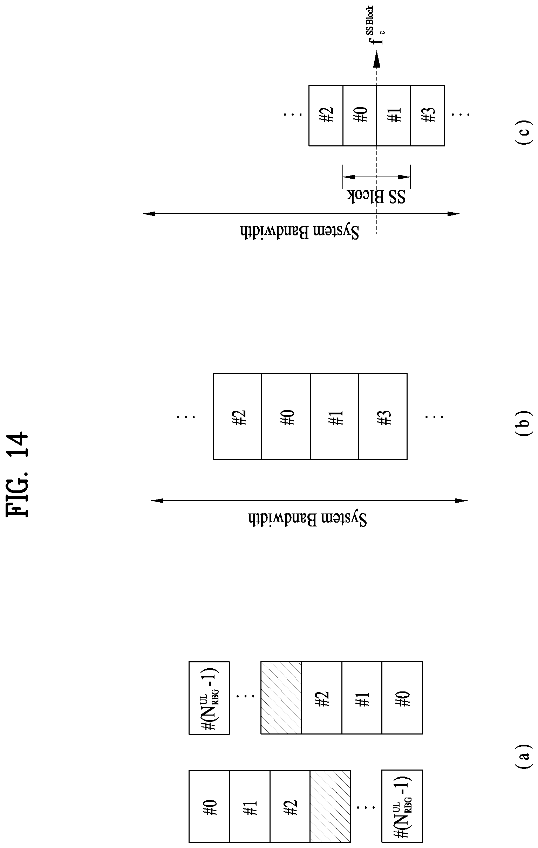

That is, according to Option 2-1, $n_{RBG\,offset}^{RACH}$ as offset may be determined in units of RBGs to allocate the frequency resource. Option 2-1 may include a first method of indexing the separated $N_{PRG}^{UL}$ RBGs with a value of 0 to $N_{PRG}^{UL}-1$ based on an uppermost or lowermost part of $N_{PRG}^{UL}$ as shown in (a) of FIG. 14 and a second method of indexing the separated $N_{PRG}^{UL}$ RBGs based on the center frequency as shown in (b) of FIG. 14. The second method is the same as that in Option 1-2 above and, thus, a detailed description thereof is omitted here. The second method uses modulo calculation and, thus, may transfer information with a smaller bit number than in the first method.

(2) Option 2-2: Method of Allocating RACH Frequency Resource based on Center Frequency of SSB Bandwidth

When the entire system bandwidth defined in Option 2-1 is large, complexity of a UE may be increased. To compensate for this, Option 2-2 proposes a method of more flexibly allocating a resource in an entire system bandwidth using frequency information of a SSB that is decoded prior to RACH transmission.
That is, as shown in (c) of FIG. 14, the second method of Option 2-1 above may be applied based on the center frequency of the decoded SSB to allocate the frequency resource.

**Embodiment 2-2. Method of Indicating RACH Resource in UE Minimum Bandwidth or CORESET**

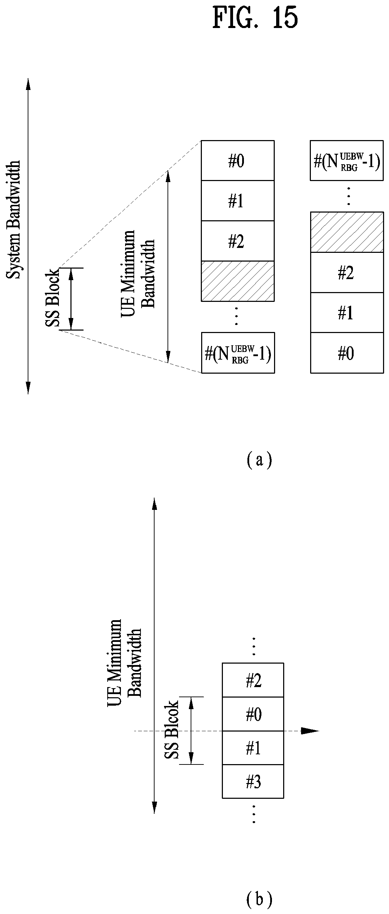

In Embodiment 2-1, information of RACH resource allocation is represented in consideration of an entire system bandwidth region and, thus, this may be appropriate for the case in which the entire system bandwidth is small but a large number of bits may be required when the entire system bandwidth is large. The UE minimum bandwidth and the CORESET are defined above. In this case, a UE may acquire $N_{RBG}^{UEBW}$ through the RMSI based on the center frequency of the SSB as described above or may acquire a value of $N_{RBG}^{CORESET}$ through a PBCH and may indicate a RACH frequency resource using the same method as the first method or the second method of Option 2-1 based on the acquired information. That is, in Embodiment 2-2, the configured UE minimum bandwidth may be a bandwidth that is configured via signaling of an eNB to transmit a RACH or a RACH preamble by the UE and, in this regard, the number of RACH frequency resources allocated in the configured bandwidth through the RMSI may be configured.
(a) of FIG. 15 illustrates a method of indicating a RACH frequency resource using the first method of Option 201 in the UE minimum bandwidth and (b) of FIG. 15 illustrates a method of indicating a RACH frequency resource using the second method of Option 2-2 in a UE maximum bandwidth.

**Embodiment 2-3. Method of Indicating RACH Resource in SSB Bandwidth**

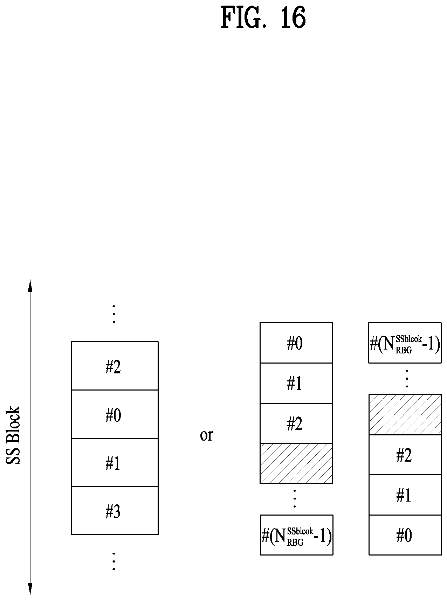

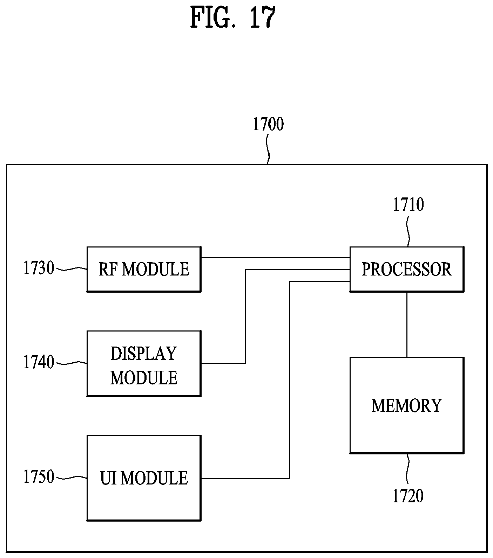

Embodiment 2-3 relates to a method in which a RACH frequency allocation region is matched with a SSB and a UE transmits a RACH in a bandwidth of a detected SSB and, that is, relates to a method of configuring a RACH frequency resource based on a smallest bandwidth among bandwidths configured for the UE. Embodiment 2-3 may includes a third method of transferring offset $n_{RBG\,offset}^{RACH}$ value based on an uppermost or lowermost part, a fourth method of transferring a modulo value, and a hybrid method that flexibly uses the third and fourth methods. FIG. 16 illustrates an embodiment to which the third and fourth methods are applied. In a hybrid type of configuration method, a value in the form of ($offset_{type1}$, $offset_{type2}$) may be transferred and a frequency resource may be flexibly determined without determination of an uppermost/lowermost part or the center frequency as a starting point.
Referring to FIG. 17, a communication apparatus 1700 includes a processor 1710, a memory 1720, an RF module 1730, a display module 1740, and a User Interface (UI) module 1750.
The communication device 1700 is shown as having the configuration illustrated in FIG. 17, for the convenience of description. Some modules may be added to or omitted from the communication apparatus 1700. In addition, a module of the communication apparatus 1700 may be divided into more modules. The processor 1710 is configured to perform operations according to the embodiments of the present disclosure described before with reference to the drawings. Specifically, for detailed operations of the processor 1710, the descriptions of FIGS. 1 to 16 may be referred to.

The memory 1720 is connected to the processor 1710 and stores an Operating System (OS), applications, program codes, data, etc. The RF module 1730, which is connected to the processor 1710, upconverts a baseband signal to an RF signal or downconvertsan RF signal to a baseband signal. For this purpose, the RF module 1730 performs digital-to-analog conversion, amplification, filtering, and frequency upconversion or performs these processes reversely. The display module 1740 is connected to the processor 6010 and displays various types of information. The display module 1740 may be configured as, not limited to, a known component such as a Liquid Crystal Display (LCD), a Light Emitting Diode (LED) display, and an Organic Light Emitting Diode (OLED) display. The UI module 6050 is connected to the processor 6010 and may be configured with a combination of known user interfaces such as a keypad, a touch screen, etc.

The embodiments of the present invention described above are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present invention or included as a new claim by a subsequent amendment after the application is filed.

A specific operation described as performed by a BS may be performed by an upper node of the BS. Namely, it is apparent that, in a network comprised of a plurality of network nodes including a BS, various operations performed for communication with a UE may be performed by the BS, or network nodes other than the BS. The term 'BS' may be replaced with the term 'fixed station', 'Node B', 'evolved Node B (eNode B or eNB)', 'Access Point (AP)', etc.

The embodiments of the present invention may be achieved by various means, for example, hardware, firmware, software, or a combination thereof. In a hardware configuration, the methods according to exemplary embodiments of the present invention may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, an embodiment of the present invention may be implemented in the form of a module, a procedure, a function, etc. Software code may be stored in a memory unit and executed by a processor. The memory unit is located at the interior or exterior of the processor and may transmit and receive data to and from the processor via various known means.

Those skilled in the art will appreciate that the present invention may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

The aforementioned method and apparatus for transmitting and receiving a random access channel have been described in terms of an example in which the method and the apparatus are applied to a 5th generation NewRAT system but may be applied to various wireless communication systems other than the 5th generation NewRAT system.

**Claims**

1. A method of transmitting a random access channel (RACH) by a user equipment (UE) in a wireless communication system, the method comprising:

   receiving information on a specific bandwidth for transmitting a RACH preamble and information on a number of RACH frequency resources allocated in the specific bandwidth; and
   transmitting the RACH preamble over at least one RACH frequency resource among a plurality of RACH frequency resources allocated by the number of the RACH frequency resources in the specific bandwidth, wherein the specific bandwidth is configured as a portion of an entire system bandwidth.

2. The method according to claim 1, wherein the plurality of RACH frequency resources is indexed in ascending order from a RACH frequency resource including a lowest frequency in the specific bandwidth.

3. The method according to claim 1, wherein the plurality of RACH frequency resources is indexed based on a center frequency of a bandwidth for a synchronization signal.

4. The method according to claim 1, wherein the specific bandwidth has a larger size than a size of a bandwidth for a synchronization signal.

5. The method according to claim 1, wherein the plurality of RACH frequency resources are each associated with at least one synchronization signal transmitted to the UE by a base station (BS).

6. The method according to claim 1, wherein the RACH preamble is any one of a first RACH preamble using a long sequence with a length of 839 or a second RACH preamble using a short sequence with a length of 139; and wherein subcarrier spacing for the first RACH preamble and subcarrier spacing for the second RACH preamble are different from each other.

7. A user equipment (UE) for transmitting a random access channel (RACH) in a wireless communication system, comprising:

a transceiver configured to transmit and receive a radio signal to and from a base station (BS); and
a processor connected to the transceiver and configured to control the transceiver,
wherein the processor controls the transceiver to receive information on a specific bandwidth for transmitting a RACH preamble and information on the number of RACH frequency resources allocated in the specific bandwidth and
controls the transceiver to transmit the RACH preamble over at least one RACH frequency resource among a plurality of RACH frequency resources allocated by the number of the RACH frequency resources in the specific bandwidth; and
wherein the specific bandwidth is configured as a portion of an entire system bandwidth.

8. The UE according to claim 7, wherein the plurality of RACH frequency resources are indexed in ascending order from a RACH frequency resource including a lowest frequency in the specific bandwidth.

9. The UE according to claim 7, wherein the plurality of RACH frequency resources is indexed based on a center frequency of a bandwidth for a synchronization signal.

10. The UE according to claim 7, wherein the specific bandwidth has a larger size than a size of a bandwidth for a synchronization signal.

11. The UE according to claim 7, wherein the plurality of RACH frequency resources are each associated with at least one synchronization signal transmitted to the UE by a base station (BS).

12. The UE according to claim 7, wherein the RACH preamble is any one of a first RACH preamble using a long sequence with a length of 839 or a second RACH preamble using a short sequence with a length of 139; and wherein subcarrier spacing for the first RACH preamble and subcarrier spacing for the second RACH preamble are different from each other.

13. A method of receiving a random access channel (RACH) by a base station (BS) in a wireless communication system, the method comprising:

transmitting information on a specific bandwidth for transmitting a RACH preamble and information on the number of RACH frequency resources allocated in the specific bandwidth by a user equipment (UE); and
receiving the RACH preamble over at least one RACH frequency resource among a plurality of RACH frequency resources allocated by the number of the RACH frequency resources in the specific bandwidth,
wherein the specific bandwidth is configured as a portion of an entire system bandwidth.

14. A base station (BS) for receiving a random access channel (RACH) in a wireless communication system, comprising:

a transceiver configured to transmit and receive a radio signal to and from a user equipment (UE); and
a processor connected to the transceiver and configured to control the transceiver,
wherein the processor controls the transceiver to transmit information on a specific bandwidth for transmitting a RACH preamble by the UE and information on the number of RACH frequency resources allocated in the specific bandwidth and
controls the transceiver to receive the RACH preamble over at least one RACH frequency resource among a plurality of RACH frequency resources allocated by the number of the RACH frequency resources in the specific bandwidth; and
wherein the specific bandwidth is configured as a portion of an entire system bandwidth.

# FIG. 1

| UE | | eNB | | MME |
|----|--|-----|--|-----|

NAS ← → NAS

RRC ← → RRC

PDCP ← → PDCP

RLC ← → RLC

MAC ← → MAC

PHY ← → PHY

(A) CONTROL-PLANE PROTOCOL STACK

| UE | | eNB | | SAE Gateway |
|----|--|-----|--|-------------|

PDCP ← → PDCP

RLC ← → RLC

MAC ← → MAC

PHY ← → PHY

(B) USER-PLANE PROTOCOL STACK

# FIG. 2

INITIAL CELL SEARCH | SYSTEM INFORMATION RECEPTION | RANDOM ACCESS PROCEDURE | GENERAL DL/UL Tx/Rx S208

P/S - SCH & [DLRS] & PBCH — S201

PDCCH/ PDSCH (BCCH) — S202

PRACH — S203 ... PDCCH/ PDSCH — S204 ... PUSCH — S205 ... PDCCH/ PDSCH — S206

PDCCH/ PDSCH — S207 ... PUSCH/ PUCCH

• DL/UL ACK/NACK
• UE CQI/PMI/RI REPORT USING PUSCH AND PUCCH

EP 3 471 498 A1

# FIG. 3

RADIO FRAME, $T_f = 307200T_s$ = 10ms

SLOT, $T_{slot} = 15360T_s$ = 0.5ms

| #0 | #1 | #2 | #3 | $\cdots$ | #18 | #19 |

SUBFRAME

# FIG. 4

| CP | Sequence |
|---|---|
| $T_{CP}$ | $T_{SEQ}$ |

FIG. 5

**EP 3 471 498 A1**

# FIG. 6

(A)                                            (B)

24

# FIG. 7

# FIG. 8

# FIG. 9

(a)

$$p = \left\lceil B_{SS\_Block} \middle/ \Delta f_{RACH} \right\rceil \left\lceil B_{RACH} \middle/ \Delta f_{RACH} \right\rceil$$

(b)

# FIG. 10

( a )

( b )

# FIG. 11

(a)

mod(SS block index, 2) = 0

mod(SS block index, 2) = 1

(b)

# FIG. 12

RBG (Resource
Block Group)

RB (Resource
Block)

$N_{RB}^{PUSCH}$

$N_{SC}^{PUSCH}$

$\Delta f_{PUSCH}$

(a)

$f_c$

$N_{RBG}^{UL}$

$N_{RB}^{PUSCH}$

(b)

FIG. 13

EP 3 471 498 A1

# FIG. 14

( a )          ( b )          ( c )

# FIG. 15

System Bandwidth

SS Block

UE Minimum Bandwidth

#0

#1

#2

⋮

$\#(N_{RBG}^{UEBW}-1)$

$\#(N_{RBG}^{UEBW}-1)$

⋮

#2

#1

#0

( a )

UE Minimum Bandwidth

SS Blcok

⋮

#2

#0

#1

#3

⋮

( b )

# FIG. 16

SS Block

#2
#0
#1
#3

or

#0
#1
#2

$\#(N_{RBG}^{SSblcok}-1)$

$\#(N_{RBG}^{SSblcok}-1)$

#2
#1
#0

# FIG. 17

1700

1710

1730 — RF MODULE

1740 — DISPLAY MODULE

1750 — UI MODULE

PROCESSOR

MEMORY

1720

## INTERNATIONAL SEARCH REPORT

| International application No. |
| --- |
| **PCT/KR2018/005720** |

**A. CLASSIFICATION OF SUBJECT MATTER**

*H04W 74/08(2009.01)i*

According to International Patent Classification (IPC) or to both national classification and IPC

**B. FIELDS SEARCHED**

Minimum documentation searched (classification system followed by classification symbols)
H04W 74/08; H04W 74/00; H04L 5/00; H04W 72/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: RACH, random access channel, configuration information, resource, bandwidth, resource

**C. DOCUMENTS CONSIDERED TO BE RELEVANT**

| Category* | Citation of document, with indication, where appropriate, of the relevant passages | Relevant to claim No. |
| --- | --- | --- |
| Y | HUAWEI, HISILICON, "RACH Preamble Design for NR", R1-1701709, 3GPP TSG RAN WG1 Meeting #88, Athens, Greece, 07 February 2017 See section 2. | 1-14 |
| Y | KR 10-1582196 B1 (SAMSUNG ELECTRONICS CO., LTD.) 04 January 2016 See paragraph [0014]; and claim 20. | 1-14 |
| Y | WO 2016-122120 A1 (LG ELECTRONICS INC.) 04 August 2016 See paragraphs [56]-[57], [64], [89]; and figures 6, 13. | 2,5-6,8,11-12 |
| Y | AT&T, "NR SS Design: Minimum Bandwidth and Multiplexing", R1-1702131, 3GPP TSG RAN WG1 Meeting #88, Athens, Greece, 07 February 2017 See section 2.1. | 4,10 |
| A | WO 2016-208897 A1 (LG ELECTRONICS INC.) 29 December 2016 See paragraphs [70]-[225]; and figures 5-15. | 1-14 |

| ☐ Further documents are listed in the continuation of Box C. | ☒ See patent family annex. |

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 AUGUST 2018 (30.08.2018) | **31 AUGUST 2018 (31.08.2018)** |

| Name and mailing address of the ISA/KR | Authorized officer |
| --- | --- |
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2018/005720**

| Patent document cited in search report | Publication date | Patent family member | Publication date |
|---|---|---|---|
| KR 10-1582196 B1 | 04/01/2016 | KR 10-2010-0118919 A | 08/11/2010 |
| | | US 2010-0278131 A1 | 04/11/2010 |
| | | US 2014-0036847 A1 | 06/02/2014 |
| | | US 2016-0309521 A1 | 20/10/2016 |
| | | US 8620367 B2 | 31/12/2013 |
| | | US 9380601 B2 | 28/06/2016 |
| WO 2016-122120 A1 | 04/08/2016 | NONE | |
| WO 2016-208897 A1 | 29/12/2016 | CN 107810616 A | 16/03/2018 |
| | | EP 3313015 A1 | 25/04/2018 |
| | | US 2018-0145802 A1 | 24/05/2018 |

Form PCT/ISA/210 (patent family annex) (January 2015)